Europäisches Patentamt

European Patent Office

Office européen des brevets

(11) Publication number: **0 444 467 A1**

## EUROPEAN PATENT APPLICATION

(21) Application number: 91101931.3

(22) Date of filing: 12.02.91

(51) Int. Cl.⁵: B60K 6/02

(30) Priority: 19.02.90 IT 1940590

(43) Date of publication of application:
04.09.91 Bulletin 91/36

(84) Designated Contracting States:
BE CH DE DK ES FR GB LI LU NL

(71) Applicant: F.LLI MACCHI S.P.A.
Via I Maggio
Gazzada Schianno (VA)(IT)

(72) Inventor: Ruffoni Emilio c/o F.lli Macchi S.p.A
Via I Maggio
I - 21045 Gazzada Schianno (VA)(IT)

(74) Representative: Ferraiolo, Ruggero
Via Napo Torriani, 10
I-20124 Milano(IT)

(54) A city refuse collector vehicle.

(57) A refuse collector vehicle comprising e Diesel engine (8), a direct current electric motor (17), a battery (18) for feeding said electric motor (17) and a selective mechanical transmission assembly (21) adapted to drive the driving wheels (7) alternatively from said Diesel engine (8) or from said electric motor (17).

Fig. 1

The invention concerns a city refuse collector vehicle.

City refuse collector vehicles, referred to as collector vehicles in the following, are known which collect the refuses contained in caissons spread in a city area and move them to an authorized discharge area.

The power required for driving said collector vehicles and some service devices (for engaging and lifting a caisson, discharging refuse from the caisson to a collector vehicle hopper, compacting refuses in the vehicle and discharging them in a discharge area and other services that will be detailed in the following) is generally supplied from an endothermic engine, still more generally from a Diesel engine. Collector vehicles are also known wherein said power is supplied from an electric motor fed from batteries as well as wherein power for service devices is supplied from an outer power source available at each station along the vehicle path.

Each of the above arrangements presents drawbacks. Endothermic engine collector vehicles present all known drawbacks of ecologic nature: atmospheric and acustic pollution. Electric drive collector vehicles have small operating range and velocity.

This present invention obviates all said drawbacks while completely settles the problem of collecting refuses, compacting them in the collector vehicle, moving them to a discharge area and discharging them.

The invented collector vehicle comprises all parts provided in a conventional collector vehicle, in particular an endothermic engine, a gearbox, a clutch and service devices and, as claimed, comprises a selective mechanical transmission assembly that provides for the drive action alternatively from a first motor means or from a second motor means, to driver's choice, said first motor means being said conventional endothermic engine and said second motor means being a direct current electric motor fed from an onboard battery and provided with its own clutch, this electric motor being adapted to carry out the alternative work of battery recharging.

In particular, said selective mechanical transmission assembly comprises: a first gear wheel on an axially fixed shaft which receives the drive from said endothermic engine, on one side, and is connected with drive transmission means to the driving wheels, on the other side; a second gear wheel on an axially fixed shaft which gear meshes said first gear wheel; a third gear wheel on an axially sliding shaft under the control of a first coupling means actuated by a driver in order to mesh or disengage said second gear wheel, the latter shaft being connected with a second transmission means to drive said electric motor; a fourth gear wheel on an axially sliding shaft under the control of a second coupling means actuated by said driver in order to mesh or disengage said second gear wheel, the latter shaft being connected with a compressor which recharges the compressed air reservoirs and with a pump which actuates the power steering.

It will be realized from the above description that said selective mechanical transmission assembly is adapted alternatively to: a) be connected with said endothermic engine and disconnected with said third gear wheel (so, disconnected with the electric motor) and transmit the drive from the endothermic engine to the driving wheels; b) be disconnected with the endothermic engine, have said third gear wheel meshing said second gear wheel and receive the drive from said electric motor, so transmitting drive to a propeller shaft and driving wheels.

Also it will be realized that said selective mechanical transmission assembly is able to transmit the drive from the endothermic engine to said electric motor so that the latter is made to rotate to work as a generator that charges the batteries which feed the electric motor. This stage takes place when the driver keeps the electric motor idle, the endothermic engine alive, the latter coupled with said first gear wheel and said third gear wheel meshing said second gear wheel. The main advantages afforded by the invention reside in that all the work the collector vehicle carries out in the city may be supplied from the electric motor, which avoids pollution, and the distance from the city to the discharge area may be covered using the endothermic engine at a convenient velocity.

The invention is described in detail herebelow with reference to the accompanying drawings in which:

FIG. 1 is an assembly view of a first embodiment,

FIG. 2 is a diagrammatic side view of the transmission assembly in said first embodiment,

FIG. 3 is a diagrammatic front part view taken along I-I in Fig. 2 and

FIG. 4 is an assembly view of a second embodiment.

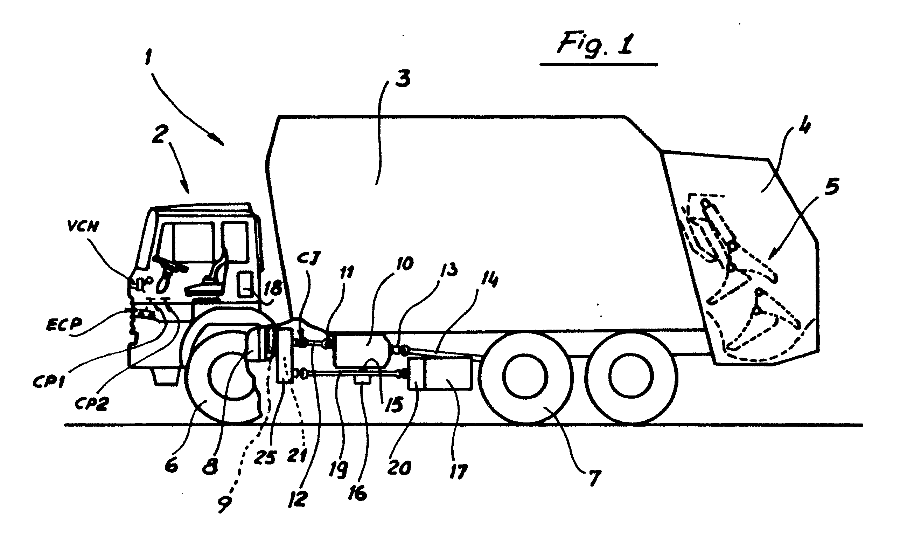

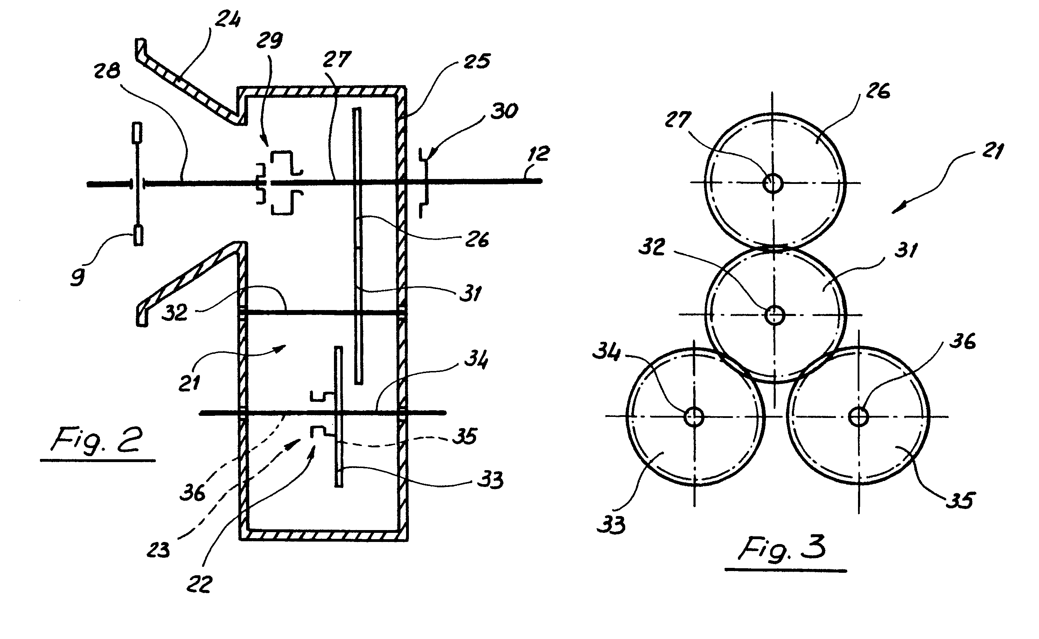

Fig. 1 shows a refuse collector 1 and conventional parts thereof as: a driver's cab 2, a refuse loading caisson 3, a rear caisson 4 which cantains service devices 5 for handling refuse caissons and refuses themselves, steering wheels 6, driving wheels 7, a Diesel engine 8 with its clutch 9 and a gear box 10 having the drive input means 11 connected with a first propeller shaft 12 for receiving the drive, having the drive output means 13 connected with a second propeller shaft 14 for transmitting the drive to the driving wheels 7 and having a third transmission means 15 for actuating a hydraulic pump 16 which supplies power for actuating the service devices 5. Furthermore, the refuse collector comprises a direct current motor 17 (d.c. motor) which is fed from a onboard electric battery 18. A fourth propeller shaft 19 has an end connected with said d.c. motor 17, through an electromagnetic clutch 20, and the other end connected with said selective mechanical transmission assembly 21 which is diagrammatically detailed in Fig. 2.

CJ shows Cardan joints connecting a shaft with its respective shaft or means; VCH shows a handle for controlling the velocity of the d.c. motor 17; ECP shows a driver's pedal for controlling the electromagnetic clutch; CP1 shows a push button for controlling by pneumatic means the first coupling means 22 (see Fig. 2) and CP2 shows a push button for controlling by pneumatic means the second coupling means 23 (see Fig. 2), all these control means being conveniently located in the driver's cab. In particular, the coupling means 22 ( only diagrammatically shown) with the electric motor is disconnected by pneumatic means and reconnected by a spring, whilst the second coupling means 23 (only diagrammatically shown) in connected by pneumatic means and disconnected by a spring.

Fig. 2 shows a cup 24 which receives a clutch 9 of the Diesel engine 8 and is associated to a case 25 containing said selective mechanical transmission assembly 21 composed by: a first gear wheel 26 whose axially fixed shaft 27 is coupled through a third coupling means 29 with the output clutch shaft 28, at one side, and is connected with said first propeller shaft 12 at the other side through a flange 30 which transmits the drive to the gear box 10; an axially fixed shaft 32 carrying a second gear wheel 31 meshing said first gear wheel 26; a third gear wheel 33 on a shaft 34 sliding axially under the control of a second coupling means 22 to mesh or disengage said second gear wheel 31, the shaft 34 for said third gear wheel 33 being connected with the fourth propeller shaft 19 which actuates the d.c. motor 17 through the electromagnetic clutch 20; a fourth gear wheel 35 on a shaft 36 which slides axially under the control of a third coupling means 23 for meshing or disengaging said second gear wheel 31, the shaft 36 for said fourth gear wheel 35 being connected for actuating a compressor and a pump (not shown) respectively for recharging the air reservoirs and driving the power steering.

It is realized that one end only of shaft 36 may be connected with an assembly for transmitting the drive to said compressor and said pump, as well as that one end of shaft 36 may be connected with said compressor and the other end with said pump.

Fig. 3 shows the relative position of the four gear wheels 26, 31, 33, 35 and respective shafts 27, 32, 34, and 36, all these wheels and shafts being part of the selective mechanical transmission assembly 21.

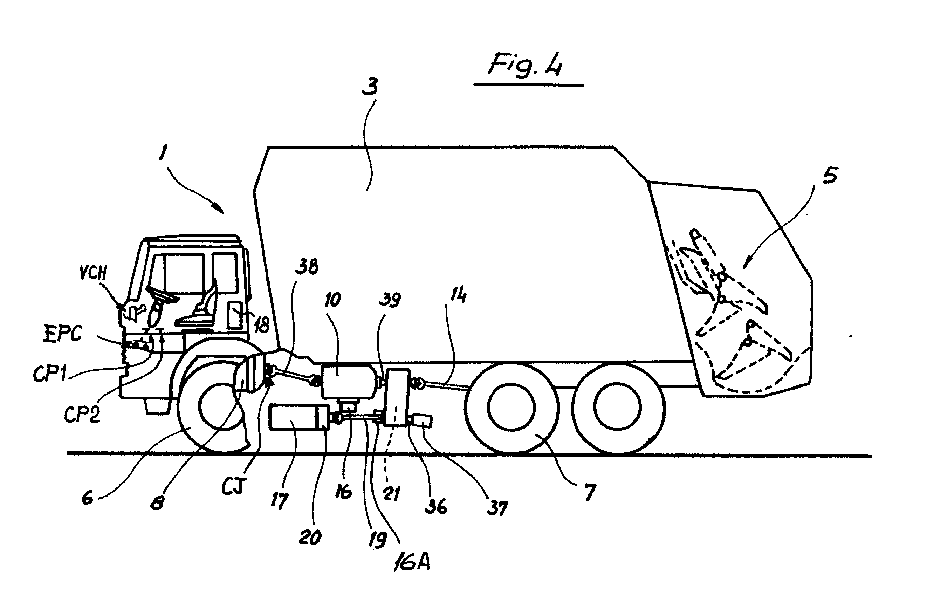

Fig. 4 shows the selective mechanical transmission assembly 21 located between said gear box 10 and shaft 14 which transmits the drive to the drive wheels 7 instead of being located between the clutch of the endothermic engine 8 and the gear box 10, as in the embodiment of Fig. 1. There is no need of a detailed description to understand the arrangement of the selective mechanical trnsmission assembly 21 in the new location. It should be noted that, as the gear box 10 may be inoperative in this illustrated embodiment, a pump 16A is provided for actuating the service devices, which pump is connected with the left end of shaft 36, while a pump 37, for actuating the power steering, is connected with the right end of same shaft 36 in said selective mechanical transmission assembly 21. Substantially, all those parts are visible that are shown and described with reference to Fig. 1, in particular the d.c. motor 17 with its electromagnetic clutch 20, a propeller shaft 38 between the clutch of diesel engine 8 and gear box 10, a propeller shaft 39 between the gear box 10 and shaft 27 (not shown) in the selective mechanical transmission assembly 21, a pump 16 for actuating the service devices 5, Cardan joints CJ, as well as the fourth propeller shaft 19 between the clutch 20 and shaft 34 (not shown) in the selective mechanical transmission assembly 21.

## Claims

1. A refuse collector vehicle (1) for city refuses comprising services devices (5) for handling a refuse caisson and refuses themselves, an endothermic engine (8) for the drive and services, a clutch (9) associated with the endothermic engine and a gear box (10) **characterised** in that said vehicle also comprises a selective mechanical transmission assembly (21) carrying a first gear wheel (26) fixed on an axially fixed shaft (27) which, on one side, receives the drive from said endothermic engine (8) and, on the other side, is connected with means (12, 10, 14,) for transmitting the drive to the drive wheels (7), a second gear wheel (31), fixed on an axially fixed shaft (32), meshing said first gear wheel (26), a third gear wheel (33) fixed on an axially sliding shaft (34) under the control of a first coupling means (22) which may be actuated by a driver for meshing or disengaging said second gear wheel (31), the latter shaft (34) being coupled with a third transmission means (19, 36) to actuate said electric motor (17) through a clutch (20) operable from the driver, a fourth ear wheel (35) fixed on a shaft (36) axially sliding under the control of a second coupling means (23) operable from the driver for meshing or disengaging said second gear wheel (31), the latter shaft (36) being connected with a compressor which recharges the compressed air reservoirs and with a pump (37) which actuates the power steering, all the above in order to supply the energy required for driving the refuse collector vehicle, the service devices, the compressor and the pump alternatively from the said endothermic engine (8) or from said electric motor (17).

2. A refuse collector vehicle (1) according to claim 1 characterised in that said selective mechanical transmission assembly (21) is located between the clutch (9) of the endothermic engine (8) and the gear box (10) by means of a first gear wheel (26) fixed on an axially fixed shaft (27) connected, on one side, with a first transmission means (28) for the clutch (9) providing the drive from said endothermic engine (8) under the control of a third coupling means (29) operable from the driver and, on the otrher side, with a propeller shaft (12) which drives the driving wheels (7) through the gear box (10).

3. A refuse collector vehicle (1) according to claim 1 characterised in that said selective mechanical transmission assembly (21) is located between said gear box (10) and said propeller shaft (14) which drives the driving wheels (7) by means of a first gear wheel (26) fixed on an axially fixed shaft (27) and connected, on one side, with the output shaft (39) of the gear box (10) and, on the other side, with shaft (14) which drives the driving wheels (7).

Fig. 1

_Fig. 2_

_Fig. 3_

_Fig. 4_

EP 0 444 467 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 805 594 (DAIMLER-BENZ) <br> * the whole document * <br> — — — | 1-3 | B 60 K 6/02 |
| A | DE-A-2 029 763 (THE WARNER AND SWASEY CO.) <br> * page 2, line 26 - page 3, line 2 * * page 7, line 30 - page 9, line 11; claims 7, 9; figures 4, 5 * <br> — — — | 1,2 | |
| A | DE-A-2 345 018 (SAVIEM) <br> * page 2, lines 8 - 14 * * page 4, lines 1 - 16 * * figures 1-4 * <br> — — — | 1,2 | |
| A | EP-A-0 248 178 (M A N NUTZFAHRZEUGE GMBH) <br> * abstract; figure 1 * * page 3, lines 16 - 22 * <br> — — — — — | 1 | |
| | | | **TECHNICAL FIELDS SEARCHED (Int. Cl.5)** |
| | | | B 60 K <br> B 60 L |

The present search report has been drawn up for all claims

| Place of search | Date of completion of search | Examiner |
|---|---|---|
| The Hague | 12 June 91 | TOPP-BORN S. |